# DEMANDE DE BREVET EUROPEEN

(11) **EP 2 146 218 A1**
(43) Date de publication de la demande: **20.01.2010**
(21) Numéro de dépôt: 08305402.3
(22) Date de dépôt: 15.07.2008
(51) Int. Cl.: G01S 5/00

(54) **Procédé de chargement de coordonnées géographiques d'une entité dans un terminal GPS d'un utilisateur**

(71) Demandeur: GEMPLUS, 13420 Gémenos (FR)
(72) Inventeur: Botuha, Stéphane, 83140, Six Fours les plages (FR)

(57) **Abrégé**

L'invention concerne un procédé de chargement de coordonnées géographiques d'une entité E2 dans un terminal GPS 10 d'un utilisateur E1, appelé premier utilisateur.

Selon l'invention, le procédé consiste à :
a - transmettre du premier utilisateur E1 à un terminal distant 11 une demande 12 de coordonnées géographiques de l'entité E2 ;
b - transmettre du terminal distant 11 au premier utilisateur E1 les coordonnées géographiques de cette entité E2 si celle-ci a marqué son accord pour que ses coordonnées géographiques soient transmises ;
c - charger les coordonnées géographiques reçues par le premier utilisateur E1 dans le terminal GPS 10 du premier utilisateur E1.

## Description

Le domaine de l'invention est celui du guidage de personnes et concerne plus particulièrement un procédé de chargement de coordonnées géographiques d'une identité dans un terminal GPS d'un utilisateur cherchant à connaître l'emplacement ou la localisation géographique de cette entité.

L'invention trouve une application toute particulière dans le domaine de la radiotéléphonie mobile notamment lorsqu'un utilisateur, appelé premier utilisateur ou alors première entité, cherche à connaître la localisation géographique d'une entité distante , cette entité distante pouvant être fixe ou mobile. Il peut par exemple s'agir, en ce qui concerne cette entité distante, d'un bâtiment public tel qu'un bureau de poste, d'une mairie ou d'un hôpital. Il peut également s'agir d'un bâtiment privé tel qu'un restaurant ou de l'adresse d'un particulier. Dans le cas d'une entité distante mobile il s'agit typiquement de la position géographique d'un détenteur d'un téléphone mobile.

Lorsqu'une entité cherche à connaître la position géographique d'une autre entité, elle fait typiquement appel à un service de localisation par Internet de type Mappy (marque déposée) afin de situer géographiquement cette autre entité. Ce service de localisation lui permet d'obtenir une carte géographique situant l'entité recherchée. Après impression de la carte, l'entité peut se repérer géographiquement pour rejoindre l'endroit désiré.

Il est également connu, afin de permettre le guidage de personnes, de faire appel à un terminal GPS qui, une fois les coordonnées géographiques de l'entité recherchée enregistrées dans le terminal GPS, guide en temps réel l'utilisateur vers sa cible. Cependant, il n'existe pas de système faisant correspondre une adresse fixe à des coordonnées géographiques. Un utilisateur désirant se diriger vers une adresse fixe n'a donc d'autre solution que de se servir d'un service de style Mappy (marque déposée). Le problème du guidage de personnes vers une entité mobile n'est pas non plus résolu par les systèmes connus.

L'invention vise à remédier à ces inconvénients. Plus précisément, un des objectifs de l'invention est de fournir un procédé permettant de guider un utilisateur vers une entité, que cette entité soit fixe ou mobile.

Cet objectif, ainsi que d'autres qui apparaîtront par la suite, est atteint grâce à un procédé de chargement de coordonnées géographiques d'une entité dans un terminal GPS d'un utilisateur, appelé premier utilisateur, ce procédé consistant à :
a - transmettre du premier utilisateur à un terminal distant une demande de coordonnées géographiques de cette entité ;
b - transmettre du terminal distant au premier utilisateur les coordonnées géographiques de cette entité si celle-ci a marqué son accord pour que ses coordonnées géographiques soient transmises ;
c - charger les coordonnées géographiques reçues par le premier utilisateur dans le terminal GPS de ce premier utilisateur.

Dans un mode de mise en oeuvre préférentiel, le terminal distant constitue cette entité.

Dans un autre mode de mise en oeuvre, le terminal distant est un serveur stockant des coordonnées géographiques d'entités fixes.

Dans un autre mode de mise en oeuvre, le terminal distant est un système d'interrogation d'entités mobiles réalisant les opérations suivantes :
- à réception d'une demande de coordonnées géographiques provenant du premier utilisateur, le système d'interrogation d'entités mobiles transmet à l'entité mobile concernée une demande de ses coordonnées géographiques ;
- à réception des coordonnées géographiques de l'entité mobile concernée, le système d'interrogation d'entités mobiles retransmet les coordonnées géographiques au premier utilisateur.

Préférentiellement, les communications entre ledit terminal GPS du premier utilisateur et le terminal distant sont effectuées par voie hertzienne dans un réseau de radiocommunications mobiles.

Avantageusement, le terminal GPS comporte des fonctionnalités d'un téléphone de radiotéléphonie mobile.

D'autres caractéristiques et avantages de l'invention apparaîtront à la lecture suivante d'un mode de mise en oeuvre avantageux de l'invention, donné à titre illustratif et non limitatif, et des dessins annexés dans lesquels :
- la figure 1 est une représentation schématique d'un premier mode de mise en oeuvre du procédé selon l'invention ;
- la figure 2 est une représentation schématique d'un deuxième et troisième mode de mise en oeuvre du procédé selon l'invention.

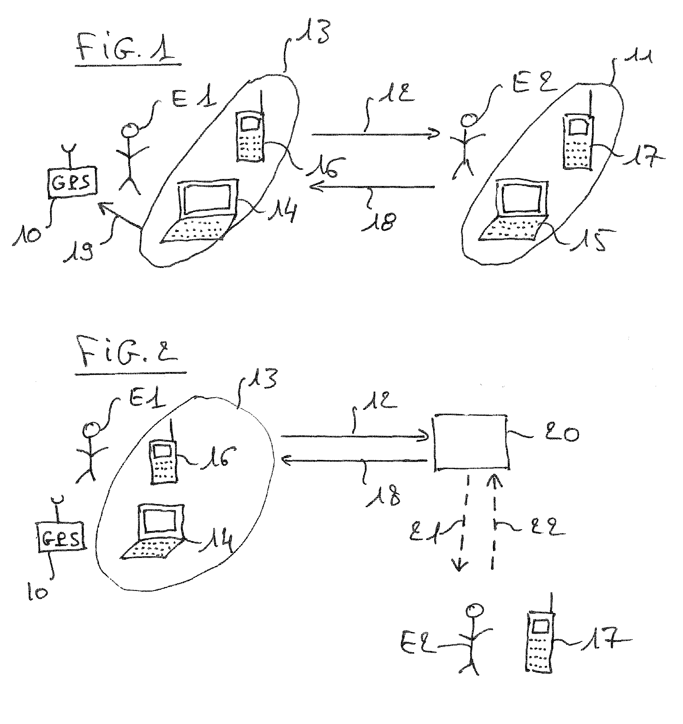

La figure 1 est une représentation schématique d'un premier mode de mise en oeuvre du procédé selon l'invention.

Dans cette figure, un utilisateur E1 , aussi appelé premier utilisateur, désire obtenir les coordonnées géographiques d'une entité E2, par exemple afin de se rendre chez elle. E1 dispose à cet effet d'un terminal GPS 10 dans lequel les coordonnées géographiques de l'entité E2 seront chargées. L'entité E2 peut être une entité fixe, c'est-à-dire que sa position géographique est intangible, ou alors une entité mobile, c'est-à-dire que sa position évolue dans le temps. Un exemple d'une position géographique fixe est typiquement celle d'une entité E2 constituée par un commerce, une administration ou celle d'un particulier. Un exemple de position géographique mobile est typiquement celui d'un terminal mobile, tel qu'un radiotéléphone fonctionnant dans un réseau de radiocommunications mobile.

Selon l'invention, l'utilisateur E1 transmet à un terminal 11 de l'entité E2 une demande 1 2 de ses coordonnées géographiques. Cette requête peut être formulée à l'aide de n'importe quel terminal de télécommunications 13 appartenant à E1 . Il peut par exemple s'agir d'un ordinateur 14 communiquant via Internet à un ordinateur fixe 15 appartenant à E2. La requête est dans ce cas par exemple formulée par e-mail. Il peut également s'agir d'une requête entre un terminal mobile 16 appartenant à l'entité E1 et un autre terminal mobile 17 appartenant à E2. Cette requête est dans ce cas réalisée via OTA ("Over the Air" en anglais). Il peut s'agir d'un simple SMS ou alors d'une demande formatée intelligible par le terminal mobile 17 de l'entité E2.

A réception de la demande de coordonnées géographiques, plusieurs scénarii sont possibles :
- si l'entité E2 est un commerce, une administration ou en général toute entité n'ayant aucune raison de garder sa localisation géographique secrète (typiquement une entité apparaissant dans les pages jaunes de l'annuaire téléphonique), ses coordonnées géographiques sont automatiquement transmises 18 à l'entité E1 ;
- si l'entité E2 est un particulier n'apparaissant pas dans les pages blanches de l'annuaire téléphonique ou si la demande de coordonnées géographiques est transmise sur son numéro de téléphone mobile, la transmission 18 des coordonnées géographiques n'est réalisée que si l'entité E2 a marqué son accord pour cette transmission, soit au préalable et sans conditions (et dans ce cas la transmission des coordonnées géographiques est réalisée automatiquement à réception de la requête), soit à réception de la requête 12 .

A réception des coordonnées géographiques de l'entité E2, le terminal 13 de l'entité E1 ayant formulé la demande 12 transmet 19 automatiquement ces coordonnées au terminal GPS 10. Dans le cas où le terminal ayant formulé la demande des coordonnées géographiques intègre un terminal GPS, une telle transmission est inutile, la partie GPS de ce terminal recevant directement les coordonnées géographiques reçues de E2 .

A partir de ce moment là, l'entité E1 peut se diriger vers l'entité E2 grâce aux coordonnées géographiques chargées dans son terminal GPS 10. C'est le terminal GPS 10 de E1 qui le dirigera vers E2.

La mise en oeuvre de l'invention est aisée puisqu'elle peut se limiter à l'installation d'applications logicielles dans les terminaux 14 à 17. L'application gérant l'émission de la requête 12 et la réception 18 des coordonnées géographiques n'a rien de particulier. En revanche, celle gérant la réception de la requête 12 et l'émission des coordonnées géographiques 18 nécessite, dans le cas d'une application à un terminal mobile, une étape d'interrogation de l'utilisateur E2 lui demandant s'il est d'accord pour que ses coordonnées géographiques soient transmises à E1. Des moyens d'interrogation exploitant une interface tel qu'un simple écran sont alors nécessaires pour interagir avec l'utilisateur E2.

Dans ce mode de mise en oeuvre, l'entité E2 qui reçoit la requête de l'entité E1 est donc celle qui retransmet à E1 ses coordonnées géographiques.

Dans un deuxième mode de mise en oeuvre de l'invention, représenté schématiquement à la figure 2, le terminal distant est un serveur 20 stockant des coordonnées géographiques d'entités fixes. Il s'agit typiquement d'un système faisant correspondre une adresse ou un numéro de téléphone fixe à des coordonnées géographiques. A réception de la requête 12 de demande de coordonnées géographiques d'une entité, le serveur 20 transmet 18 les coordonnées géographiques de cette entité à l'utilisateur E1.

Dans un troisième mode de mise en oeuvre de l'invention venant éventuellement en complément de celui qui vient d'être décrit, le terminal distant 20 est constitué par un système d'interrogation d'entités mobiles. Ce troisième mode de mise en oeuvre est schématiquement représenté en traits discontinus sur la figure 2.

A réception d'une requête 12 des coordonnées géographiques d'une entité mobile E2, le système d'interrogation d'entités mobiles 20 transmet au terminal mobile 17 de l'entité E2 une demande 21 de ses coordonnées géographiques. Le terminal 17 peut connaître sa position géographique par plusieurs moyens :
- le terminal 17 peut intégrer un récepteur GPS ;
- une information de localisation, appelée LOCI, peut lui être fournie par le réseau de radiocommunications ;
- le terminal 17 peut, par triangulation par rapport aux stations BTS qui l'entourent, déterminer sa position géographique et par là même en déduire ses coordonnées géographiques.

A réception de la demande 21, l'utilisateur E2 valide, s'il le désire, la transmission de sa position géographique courante et ses coordonnées géographiques sont transmises 22 au système d'interrogation 20 qui les retransmet au terminal 14 ou 16 de l'utilisateur E1. Celles-ci sont alors, comme précédemment, transmises au terminal GPS 10 de E1.

La description qui précède a été donnée à simple titre illustratif et non limitatif et l'homme du métier imaginera aisément d'autres modes de mise en oeuvre de la présente invention entrant dans le cadre des revendications.

## Revendications

1. Procédé de chargement de coordonnées géographiques d'une entité (E2) dans un terminal GPS (10) d'un utilisateur (E1), appelé premier utilisateur, **caractérisé en ce qu'**il consiste à :
a - transmettre dudit premier utilisateur (E1) à un terminal distant (11, 20) une demande (12) de coordonnées géographiques de ladite entité (E2) ;
b - transmettre dudit terminal distant (11, 20) audit premier utilisateur (E1) les coordonnées géographiques de ladite entité (E2) si celle-ci a marqué son accord pour que ses coordonnées géographiques soient transmises ;
c - charger les coordonnées géographiques reçues par ledit premier utilisateur (E1) dans ledit terminal GPS (10) dudit premier utilisateur (E1).

2. Procédé selon la revendication 1, **caractérisé en ce que** ledit terminal distant (11) est ladite entité (E2).

3. Procédé selon la revendication 1, **caractérisé en ce que** ledit terminal distant est un serveur (20) stockant des coordonnées géographiques d'entités fixes.

4. Procédé selon la revendication 1, **caractérisé en ce que** ledit terminal distant (20) est un système d'interrogation d'entités mobiles (17) réalisant les opérations suivantes :
- à réception d'une demande (12) de coordonnées géographiques provenant dudit premier utilisateur (E1), ledit système (20) d'interrogation d'entités mobiles transmet à l'entité mobile concernée (17) une demande de ses coordonnées géographiques ;
- à réception des coordonnées géographiques de ladite entité mobile concernée (17), ledit système (20) d'interrogation d'entités mobiles retransmet lesdites coordonnées géographiques audit premier utilisateur (E1).

5. Procédé selon l'une des revendications 1 à 4, **caractérisé en ce que** les communications entre ledit terminal GPS (10) dudit premier utilisateur (E1) et ledit terminal distant (11, 20) sont effectuées par voie hertzienne dans un réseau de radiocommunications mobiles.

6. Procédé selon l'une des revendications 1 à 5, **caractérisé en ce que** ledit terminal GPS (10) comporte des fonctionnalités d'un téléphone de radiotéléphonie mobile.
